Europäisches Patentamt

European Patent Office

Office européen des brevets

(19)

(11) Veröffentlichungsnummer: **0 001 231**
**A1**

(12)

# EUROPÄISCHE PATENTANMELDUNG

(21) Anmeldenummer: 78100807.3

(22) Anmeldetag: 01.09.78

(51) Int. Cl.²: **H 01 B 19/00**
H 01 B 17/02, H 01 B 17/14
H 01 B 17/32, H 01 B 3/30
B 29 F 1/00

(30) Priorität: 19.09.77 DE 2742042

(43) Veröffentlichungstag der Anmeldung:
04.04.79 Patentblatt 79/7

(84) Benannte Vertragsstaaten:
BE CH DE FR LU NL SE

(71) Anmelder: SIEMENS AKTIENGESELLSCHAFT Berlin
und München
Postfach 261
D-8000 München 22(DE)

(72) Erfinder: Herold, Georg, Dr.
Herzogstrasse 10
D-8620 Lichtenfels(DE)

(54) Verfahren zur Herstellung von Kunststoffisolierkörpern mit Schirmen für den Innenraum- und Freilufteinsatz.

(57) Durch Spritzgießen oder Spritzpressen werden unter Verwendung von spritzfähigen granulierten bzw. teigigen (starre oder flexible Einstellung) Formmassen auf Basis von ungesättigten Polyester- oder Epoxyharzen, heterocyclischen Polyurethanharzen, Polypropylen (PP), Äthylen-Propylen-Monomerkautschuk (EPM), Äthylen-Propylen- Dien-Monomerkautschuk (EPDM), synthetischem Kautschuk, Siliconkautschuk und anderen Kunststoffisolierkörpern mit Schutzschirmen für den Innenraum- und Freilufteinsatz, insbesondere Stütz- und Hängeisolatoren hergestellt. Die Herstellung kann in einteiliger oder mehrteiliger Anspritzung erfolgen.

FIG 2

SIEMENS AKTIENGESELLSCHAFT          Unser Zeichen

Berlin und München                  VPA 77 P 7552 EPC

**Verfahren zur Herstellung von Kunststoffisolierkörpern
mit Schirmen für den Innenraum- und Freilufteinsatz**

Es ist bekannt, daß mit mehr oder weniger gefüllten Kunststofformmassen auf der Basis von aromatischen, cycloaliphatischen oder heterocyclischen Epoxidharzen oder auch Kautschuksystemen wie z.B. Siliconkautschuk (DT-AS 1 665 490) nach dem Gießverfahren Isolierkörper hergestellt werden können (DT-PS 1 490 529, CH-PS 400 277). Bei diesem Formverguß können die Massen starr oder flexibel eingestellt sein. Vielfach werden auch Kunststoffe, insbesondere Polytetrafluoräthylen (PTEE) nach dem Sinterverfahren (GBR-PS 1 066 209, DT-AS 1 804 422) oder auch Epoxidsysteme nach dem Schleuderverfahren (CH-PS 419 272) zu Isolierkörpern verarbeitet. Bei strahlenvernetztem Siliconkautschuk wird vorwiegend die Montagebauweise angewandt, wobei die vorgefertigten Einzel-Schirmelemente im Preßverfahren hergestellt werden.

Td 2 Dm / 8.11.1978

Langstäbe werden in der Regel durch Umhüllen von glasfaserverstärkten Stäben im Gieß-, Sinter- oder Montageverfahren hergestellt. Der Stab wird hierzu in eine Form gebracht und umgossen bzw. umsintert oder Schirmelemente werden vorher gepreßt und dann auf den Strunk aufgezogen und mit diesem mittels eines Haftvermittlers verbunden bzw. verklebt.

Diese bekannten Verfahren haben vor allem für eine serienmäßige Fertigung beachtliche Nachteile. So ist man bei der Herstellung nach dem Gießverfahren formenmäßig begrenzt und man hat meist lange Herstellungscyclen. Ferner sind die meisten verfügbaren Materialien nicht so flexibel, daß sie beispielsweise bei Hängeisolatoren der im Leitungsbetrieb auftretenden Dehnung des Stabes unter Zugbelastung folgen können. Sie können so nicht direkt ohne Dazwischenschalten einer elastischen Schicht auf den glasfaserverstärkten Strunk aufgebracht werden. Ein weiterer Nachteil ist z.B. auch, daß beim Gießen von größeren Stückzahlen mehrere Formen benötigt werden. Es muß in parallelen Arbeitsgängen mit meist kostspieligen Werkzeugen gearbeitet werden.

Aufgabe der Erfindung ist es, im kontinuierlichen Betrieb unter Verwendung von möglichst nur einer einzigen Form in Serienfertigung Kunststoffisolierkörper mit Schutzschirmen für den Innenraum- und Freilufteinsatz, insbesondere Stütz- und Hängeisolatoren herzustellen.

Diese Aufgabe wird erfindungsgemäß dadurch gelöst, daß spritzgießfähige, elektrisch hochwertige, hydrophobe, kerbzähe, kriechstromfeste, erosions- und temperaturbeständige und gegebenenfalls im $\pm$ -Temperaturbereich hochelastische Formmassen durch Spritzgießen oder Spritzpressen verarbeitet werden. Die Kunststoff-Form-

- 3 -   VPA 77 P 7552 EPC

massen können mit beliebigen anorganischen und/oder organischen Füllstoffen versehen sein, wobei der Füllstoffanteil hoch, vorzugsweise 30-60 Gew.% bezogen auf das Gesamtgewicht sein kann. Die Verarbeitung der Formmassen erfolgt auf herkömmlichen Kolben- bzw. Schneckenspritzgußmaschinen. Zur Herstellung der Formkörper werden erfindungsgemäß die thermoplastischen, duroplastischen oder elastomeren Formmassen (gefüllt oder ungefüllt) dem Spritzaggregat zugeführt und unter Erwärmung plastifiziert. Anschließend wird die plastifizierte Masse unter Druck in eine Form eingespritzt. Die erhaltenen Formlinge sind lunker- und porenfrei. Die Fertigungscyclen sind bei größerem Ausstoß sehr kurz und liegen in der Größenordnung von wenigen Minuten. Durch entsprechende Materialauswahl lassen sich Formkörper mit höherer Alterungs-, Öl-, Ozon- und Witterungsbeständigkeit speziell auch mit spezifischen Eigenschaftsbildern wie z.B. selbstverlöschend, kriechstromfest herstellen.

Ein ganz besonderer Vorteil der erfindungsgemäßen Verfahrensweise liegt darin, daß durch das Anspritzen von Teilstücken an das erstgefertigte Teil Isolatoren beliebiger Länge unabhängig vom Werkzeug hergestellt werden können.

Die Kunststoff-Formmassen können erfindungsgemäß bei Temperaturen von 150-280$^{o}$C plastifiziert und unter Druck in Formen mit Temperaturen $\leqq$ 100$^{o}$C eingespritzt oder bei Temperaturen $\leqq$ 100$^{o}$C plastifiziert und unter Druck in heiße Formen, vorzugsweise in Formen mit einer Temperatur von $\geqq$ 140$^{o}$C eingespritzt werden.

Für spezielle Anwendungsfälle, beispielsweise bei der Verwendung von Thermoplasten und Kautschuksystemen für

Langstäbe, hat es sich als günstig erwiesen, wenn die Oberfläche des zu umspritzenden Einbauteiles, beispielsweise die Oberfläche von GFK-Stäben vorbehandelt, z.B. entfettet, gesandet und/oder ein Haftvermittler oder eine Haftschicht aufgebracht wird.

Nach dem erfindungsgemäßen Verfahren sind mit Kolben- bzw. Schneckenspritzgußmaschinen sowohl einteilige als auch mehrfach angespritzte Isolierkörper herstellbar. Es eignet sich besonders zur Herstellung von Stütz- und Hängeisolatoren mit Schirmen, wobei ganze Einheiten einteiliger Isolierkörper mit Schirmen oder mehrteilige Einheiten mit Schirmen herstellbar sind - einteilig z.B. im Mittelspannungsbereich, mehrteilig für höhere Spannungsreihen, z.B. $\leq$ 110 kV. Nach dieser Verfahrensweise werden mit Vorteil Hängeisolatoren hergestellt. Ein entfetteter, gesandeter und mit Haftvermittler versehener GFK-Stab wird axial in eine temperierte Form eingelegt und bei geschlossener Form umspritzt.

Für die Durchführung des erfindungsgemäßen Verfahrens geeignete Formmassen sind spritzgußfähige Duroplaste, Thermoplaste und Elastomere, beispielsweise solche auf der Basis von aromatischen, cycloaliphatischen und heterocyclischen Epoxidharzen, Polyurethan- (PUR) und Polyesterharze, Polytetrafluoräthylen (PTEE), Polypropylen (PP) und kautschukmodifizierte Polyolefine, wie z.B. Äthylen-Propylen-Monomerkautschuk (EPM) und Äthylen-Propylen-Dien-Monomerkautschuk (EPDM) und deren Mischungen sowie Mischungen mit anderen Formmassen duroplastischer, thermoplastischer und elastomerer Art.

Die Formmassen können Weichmacher, Pigmente, Farbstoffe, Formtrennmittel usw. enthalten. Als Streck- und Füllmittel können z.B. auch feinverteilte Calcite, Rutile, Quarzmehl, Kaoline, Talkum, Aluminiumoxidtrihydrat, Sulfate und deren Mischungen verwendet werden. Mit einem hohen Anteil an Füllmittel, insbesondere an silanisierten Quarzmehl wurden gute Eigenschaften erreicht.

Als besonders geeignet hat sich ein rieselfähiges Granulat aus einer Mischung von 20-30 Gew.% Polypropylen (PP), 50-60 Gew.% Äthylen-Propylen-Dien-Monomerkautschuk (EPDM) und 20-30 Gew.% silanisiertem Quarzmehl erwiesen.

Für die Herstellung von Stützern haben sich auch vorwiegend niedrigviskose duroplastische Systeme bewährt, die bereits bei Drücken $\leq$ 50 bar verarbeitbar sind.

Die nachfolgende Armaturenbefestigung erfolgt in der üblichen Art wie beispielsweise bei Langstäben durch die Aufkeilung der Stabenden im konisch verlaufenden Armaturen-Innenraum oder anderen praktizierten Ankopplungsmethoden wie z.B. vorherige Einbringung von Befestigungsbuchsen und Einkitten der Isolatorenden in Gabelkappen.

Zur weiteren Erläuterung der Erfindung und zur Verdeutlichung des durch sie erzielten Fortschritts wird auf die Zeichnung verwiesen, die den Sachverhalt an Ausführungsbeispielen erläutert.

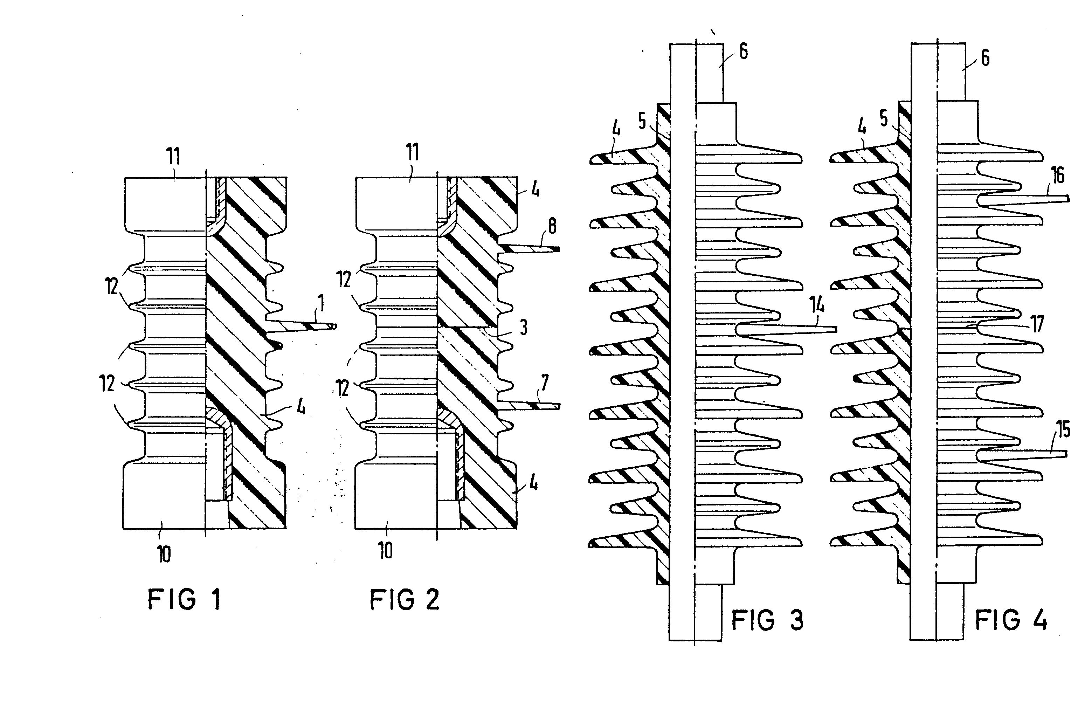

In den Figuren 1 und 2 ist ein Stützisolator und in den Figuren 3 und 4 ein Hängeisolator im Querschnitt dargestellt. Die linke Seite zeigt jeweils den Isolator und die rechte Seite den fertigungsmäßigen Aufbau.

Die Figuren 1 und 2 zeigen Stützer, wie sie z.B. in Innenräumen eingesetzt werden und die in bekannter Weise aus Fuß 10, Stützerkopf 11 und den dazwischen angeordneten Rippen 12 bestehen. Der Isolierstoff 4 bei einem Stützer gemäß Fig. 1 ist durch eine einzige Anspritzung bei 1 und gemäß Fig. 2 mittels zwei Anspritzungen bei 7 und 8 hergestellt. Mit 3 ist die Klebe- bzw. Verbindungsstelle bezeichnet.

Bei den in den Figuren 3 und 4 dargestellten Hängeisolatoren, hergestellt durch Umspritzen von GFK-Stäben mit dem entsprechenden Isoliermaterial ist mit 4 wiederum der Kunststoff, jeweils mit 5 der Haftvermittler und mit 6 der glasfaserverstärkte Strunk bezeichnet. Der Hängeisolator gemäß Fig. 3 ist durch eine einzige Anspritzung bei 14 und gemäß Fig. 4 durch eine Erstanspritzung bei 15 und eine Zweitanspritzung bei 16 hergestellt. Mit 17 ist die Klebestelle bezeichnet.

10 Patentansprüche
 4 Figuren

Patentansprüche

1. Verfahren zur Herstellung von Kunststoffisolierkörpern mit Schirmen für den Innenraum- und Freilufteinsatz, insbesondere Stütz- und Hängeisolatoren, d a d u r c h   g e k e n n z e i c h n e t , daß spritzgießfähige, elektrisch hochwertige, hydrophobe, kerbzähe, kriechstromfeste, erosions- und temperaturbeständige und gegebenenfalls im $\pm$ -Temperaturbereich hochelastische Formmassen durch Spritzgießen oder Spritzpressen verarbeitet werden.

2. Verfahren nach Anspruch 1, d a d u r c h   g e - k e n n z e i c h n e t , daß Formmassen mit einem Füllstoffgehalt von 30-60 Gew.% bezogen auf das Gesamtgewicht an anorganischen und/oder organischen feinverteilten Materialien verwendet werden.

3. Verfahren nach Anspruch 1 und 2, d a d u r c h   g e k e n n z e i c h n e t , daß Formmassen auf der Basis von aromatischen, cycloaliphatischen Epoxid-, Polyurethan- oder Polyesterharzen verwendet werden.

4. Verfahren nach Anspruch 1 und 2, d a d u r c h   g e k e n n z e i c h n e t , daß Formmassen auf der Basis von Kautschuk, modifizierten Polyolefinen (EPM, EPDM) und Mischungen derselben und/oder weitere synthetische Kautschuke oder Siliconkautschuk verwendet werden.

5. Verfahren nach Anspruch 1 bis 4, d a d u r c h   g e k e n n z e i c h n e t ,  daß die gegebenenfalls mit Füllstoff versehene, dem Spritzaggregat zugeführte Formmasse unter Erwärmen plastifiziert und die plastifizierte Masse unter Druck in eine Form gespritzt wird.

6. Verfahren nach Anspruch 5, d a d u r c h   g e -
k e n n z e i c h n e t , daß die gegebenenfalls gefüllte Formmasse bei Temperaturen von 150-280°C plastifiziert und unter Druck in eine Form mit einer Formtemperatur $\leqq$ 100°C eingespritzt wird.

7. Verfahren nach Anspruch 5, d a d u r c h   g e -
k e n n z e i c h n e t , daß die gegebenenfalls
gefüllte Formmasse bei Temperaturen von $\leqq$ 100°C plastifiziert und unter Druck in eine Form mit einer Formentemperatur $\geqq$ 140°C eingespritzt wird.

8. Verfahren zur Herstellung von Isolatoren nach
Anspruch 1 bis 7, d a d u r c h   g e k e n n -
z e i c h n e t , daß gefüllte niedrigviskose Formmassen mit einer Viskosität bis zu 50 000 cp und einem
Druck $\leqq$ 50 bar verarbeitet werden.

9. Anwendung des Verfahrens nach Anspruch 1 bis 8 zur
Herstellung von ein- und mehrteiligen Isolierkörpern.

10. Anwendung nach Anspruch 10, d a d u r c h   g e -
k e n n z e i c h n e t , daß ein- und mehrteilige
Isolierkörper unter Verwendung eines Haftvermittlers
oder einer Haftschicht auf der Oberfläche des zu umspritzenden Einbauteiles hergestellt werden.

FIG 1

FIG 2

FIG 3

FIG 4

# EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - A - 1 903 326</u> (INKU AUSSEN- UND BINNENHANDELSGESELLSCHAFT KURT SMOLKA) <br><br> * Patentanspruch 1, Seite 4, letzter Absatz - Seite 5, erster Absatz und Beispiel 1 * <br><br> --- | 1,2,3, 5,6,7 |
| | <u>DE - A - 2 425 076</u> (RHEINISCH- WESTFAELISCHE ISOLATOREN WERKE GmbH) <br><br> * Patentanspruch 1 * <br><br> --- | 1,8 |
| A | KUNSTSTOFFE, Band 66, Nr. 3, (1976) <br> W. BAUER: "Fortschritte beim Spritzgiessen von duroplastischen Formmassen auf Basis von Epoxid- harzen und ungesattigten Polyester- harzen", Seiten 122-127. <br><br> ---- | |

**KLASSIFIKATION DER ANMELDUNG (Int.Cl.²)**

H 01 B 19/00
17/02
17/14
17/32
3/30
B 29 F 1/00

**RECHERCHIERTE SACHGEBIETE (Int. Cl.²)**

H 01 B 19/00
17/02
17/14
17/32
B 29 F 1/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent- familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 15-12-1978 | VITZTHUM VON ECKSTAEDT |